# DEMANDE DE BREVET EUROPEEN

(11) **EP 0 937 689 A1**
(43) Date de publication de la demande: **25.08.1999**
(21) Numéro de dépôt: 99103042.0
(22) Date de dépôt: 16.02.1999
(51) Int. Cl.: C03C 17/00

(54) **Dalle de verre antidérapante et son procédé de fabrication**

(30) Priorité: 19.02.1998 BE 9800123
(71) Demandeur: GLAVERBEL, 1170 Bruxelles (BE)
(72) Inventeur: Verlinde, Hedwig, 8560 Wevelgem - Moorsele (BE)
(74) Mandataire: Vandenberghen, Lucienne

(57) **Abrégé**

La présente invention concerne des dalles de verre antidérapantes, par exemple des marches d'escalier en verre, comprenant au moins une feuille de verre dont une partie au moins de l'une des faces a une rugosité plus élevée que le reste de cette face. Elle concerne aussi un procédé de fabrication de ces dalles.
Les dalles conformes à l'invention comprennent une feuille de verre qui présente dans son épaisseur un ou plusieurs creux remplis d'une résine contenant des grains de matière dure.
De telles dalles possèdent des propriétés antidérapantes durables même en présence d'humidité.

## Description

La présente invention concerne une dalle de verte antidérapante comprenant au moins une feuille de verte dont une partie au moins de l'une des faces a une rugosité plus élevée que le reste de cette face. Elle concerne aussi un procédé de fabrication d'une telle dalle.

Il est connu d'utiliser du verre dans la construction de planchers, de marches d'escaliers, mais cette utilisation a généralement été freinée du fait que leur caractère lisse les rend glissants, surtout s'ils sont mouillés.

Pour remédier à ce problème, on a par exemple collé des bandes de matière rugueuse à la surface du verte, transversalement au passage des personnes. Ces bandes ne résistent pas longtemps à l'usure. Elles se décollent, constituant ainsi un danger supplémentaire. Une autre solution consiste à augmenter à certains endroits la rugosité du verte par sablage mais une telle surface reste glissante au passage de personnes portant des chaussures à semelle humide. Une autre solution encore est apportée par la demande de brevet FR 2.748.266 (Saint Gobain Vitrage) qui propose d'augmenter la rugosité de certaines zones de la surface du verte par dépôt de fines particules d'une fritte de verre. L'adhérence de la fritte de verre à la dalle est obtenue par un traitement thermique qui la ramollit. Un tel traitement est compliqué et onéreux. De plus, le ramollissement des particules de fritte arrondit leurs angles si bien que la rugosité conférée à la surface du verte n'est pas très élevée.

La présente invention remédie à ces difficultés en utilisant une feuille de verte qui présente dans son épaisseur un ou plusieurs creux remplis d'une résine contenant des grains de matière dure. Les grains de matière dure affleurent à la surface de la matière de remplissage et confèrent à cette surface une rugosité plus élevée que celle du verte constituant la feuille.

La dalle conforme à l'invention possède des propriétés antidérapantes durables et qui persistent même au contact de semelles mouillées.

Les dalles de verte destinées à faire partie d'un plancher ou de marches d'escalier doivent avoir une résistance mécanique suffisante. Elles peuvent être constituées d'une feuille de verte épaisse, d'une feuille de verre trempé mais de préférence, pour respecter les normes de sécurité, elles sont constituées de verte feuilleté. De préférence, la dalle de verte selon l'invention comprendra donc au moins deux feuilles de verte feuilletées entre elles au moyen d'un film thermoplastique et la face dont une partie au moins présente une rugosité plus élevée constitue une face extérieure de l'ensemble feuilleté.

Il est très aisé d'incorporer les dalles de verre selon l'invention dans un ensemble architectural. On peut choisir une dalle de verre transparente, translucide ou opaque par exemple en utilisant une ou des feuilles de verre clair, de verte coloré, du verte imprimé ou encore une feuille de verre revêtue d'une couche de laque qui la rend opaque.

Les dalles de verte selon l'invention peuvent être produites selon diverses dimensions. A titre d'exemple, on peut adopter des dalles de plancher carrées de 50x50 cm à 80x80 cm constituées de deux feuilles de verte de 8 mm d'épaisseur assemblées au moyen d'un film intercalaire de polyvinylbutyral, des dalles carrées de 1 m de côté constituées de deux feuilles de verte de 12 mm d'épaisseur assemblées au moyen de polyvinylbutyral. Des marches d'escalier peuvent avoir par exemple 30 cm de large et 90 cm de long et être constituées de deux feuilles de verre de 10 mm d'épaisseur assemblées au moyen de polyvinylbutyral. De telles dalles peuvent être mises en place par pose sur 4 appuis.

De préférence, lorsque la dalle selon l'invention est rectangulaire, on dispose le ou les creux dans une zone marginale le long d'au moins un des plus grands côtés du rectangle. Ceci est particulièrement utile pour les marches d'escalier où ladite zone marginale se trouvera près du bord extérieur de la marche.

La ou les zone(s) à rugosité plus élevée peut(peuvent) se présenter sous forme de plots séparés, sous forme de dessin(s), de logo(s) ou sous forme de bande(s). Il est particulièrement pratique de disposer de zone(s) à rugosité plus élevée se présentant sous forme de bandes. Dans ce cas, le ou les creux correspondant(s) sont simplement constitué(s) de rainure(s).

Il n'est pas nécessaire d'adopter un profil de rainure compliqué. De préférence, ladite rainure a un profil rectangulaire. Du fait de la bonne adhérence de la matière de remplissage dans-la rainure, il n'est pas nécessaire de prévoir une forme géométrique compliquée capable de la retenir mécaniquement.

La matière dure qui procure une rugosité élevée et confère un pouvoir antidérapant efficace peut être une matière polymère dure mais on choisit de préférence une matière minérale qui procure à la dalle une propriété antidérapante durable qui résiste à l'usure. Les matières préférées sont des grains de quartz, de quartzite, de corindon ou de carbure de silicium. Ces matières forment des grains dont les arêtes résistent à l'usure par un passage fréquent et ces grains conservent la rugosité même en présence d'humidité.

Les grains de matière dure sont maintenus en place par une résine polymère qui d'une part adhère à la surface du verte et d'autre part adhère convenablement aux grains de telle sorte qu'ils ne puissent être délogés par abrasion. On peut utiliser à cet effet une résine thermoplastique, une résine thermodurcissable. La résine peut contenir un colorant pour augmenter l'effet esthétique de la présence de la matière de remplissage. On utilise par exemple des polyuréthannes à 2 composants qui ont une résistance mécanique et une dureté importante, des résines polyester et de préférence des polymères de la famille des époxy.

Pour favoriser un bon accrochage de la résine tant au verre qu'aux grains, on ajoute de préférence un agent de couplage à la résine. Les agents de couplage les plus performants font partie de la famille des silanes. Le silane est mélangé au précurseur de la résine polymère avant sa mise en place dans le ou les espaces creusés dans le verre. Si nécessaire, on peut également traiter la surface du verre à l'aide d'un agent de couplage avant d'y placer le précurseur de la résine.

La matière de remplissage du ou des creux contient avantageusement au moins 50% en poids de grains durs, de préférence au moins 70% en poids. Cette quantité permet d'exposer un grand nombre de grains à la surface de la matière de remplissage.

Les grains ont de préférence un diamètre moyen inférieur à 1 mm, par exemple un diamètre moyen compris entre 700 et 100 µ. De telles fines particules procurent une grande surface antidérapante pour un minimum de surface exposée de la matière de remplissage. La surface exposée de la matière de remplissage d'un creux est par exemple de 2 à 5% de la surface totale de la dalle. Si le ou les creux sont sous forme de rainure, celle-ci a de préférence de 5 à 10 mm de large.

Il n'est pas nécessaire de former des creux très profonds dans l'épaisseur de la feuille de verte. Le choix de cette profondeur sera guidé d'une part par la dimension de la surface de contact matière de remplissage/verre qui doit être suffisante pour assurer une bonne adhérence entre la matière de remplissage et le verre et d'autre part par la résistance mécanique de la feuille. De préférence, la profondeur du ou des creux est comprise entre 10% et 60% de l'épaisseur de la feuille.

La présente invention concerne également un procédé de fabrication d'une dalle de verre comprenant au moins une feuille de verre dont une partie au moins de l'une des faces a une rugosité plus élevée que le reste de cette face caractérisé en ce qu'il comporte une première étape au cours de laquelle on forme par meulage ou abrasion un ou des creux dans la feuille de verre et une seconde étape au cours de laquelle on dépose dans le ou les creux des grains de matière dure mélangés à un ou des précurseurs de résine polymère et en ce que l'on fait ou l'on laisse polymériser la résine. Cette manière d'opérer est particulièrement simple. On prépare le précurseur de la résine, par exemple en mélangeant un prépolymère ou un polymère dissout et un durcisseur, on ajoute une petite quantité d'un agent de couplage tel qu'un silane et les grains durs. Le mélange est ensuite coulé dans l'espace creux à remplir. Par un choix judicieux de la résine, cette opération peut se faire à température ambiante. C'est le cas par exemple avec une résine époxy réactive qui réagit spontanément avec un durcisseur à une température ambiante.

Dans une variante de cette technique, on peut utiliser une résine qui polymérise en présence de catalyseur, par exemple une résine acrylique. Le choix d'une telle résine permet de procéder au remplissage du ou des creux de façon rapide. Dans ce cas, on peut fixer le catalyseur (un peroxyde par exemple) sur les grains de matière dure préalablement à l'opération de remplissage. Cette fixation peut se faire par exemple au moyen d'un produit organométallique. On coule le précurseur de la résine dans l'espace à remplir et en même temps ou ensuite, on projette les grains portant le catalyseur dans la matière polymérisable liquide.

L'invention sera maintenant mieux décrite à l'aide des exemples, non limitatifs, qui suivent.

### Exemple 1

On fabrique des marches d'escalier en verre par feuilletage de deux feuilles de verre clair de 10 mm d'épaisseur au moyen d'un film de polyvinylbutyral de 0,76 mm d'épaisseur. La largeur de la marche est de 30 cm. Dans la face du verte destinée à former la surface exposée de la marche, on creuse par meulage une rainure de 4 mm de profondeur et 10 mm de largeur, située à 5 cm du bord de la marche. On coule dans cette rainure un mélange constitué de :
- résine époxy Dow DER 352: 6,5 parts en poids
- durcisseur Dow XZ 9241.00: 3,3
- silane A1100 Union Carbide: 0,2
- grains de SiC: 30.
Le durcisseur est un produit aminé. Les grains de SiC ont un diamètre moyen de 210 µm et une taille maximum de 326 µm. La résine réagit spontanément avec le durcissseur à température ambiante pour former une masse compacte adhérant au verre dont la surface est fortement rugueuse. Cette surface conserve sa rugosité de façon permanente, même en présence d'humidité.

### Exemple 2

On fabrique des dalles de verre carrées de 80 cm de côté par feuilletage de deux feuilles de verre de 8 mm d'épaisseur au moyen d'un film de polyvinylbutyral de 0,76 mm d'épaisseur. On creuse par sablage des cuvettes cylindriques de 5 cm de diamètre et 3 mm de profondeur disposées en quinconce. On traite la surface des cuvettes à l'aide d'un silane qui va favoriser l'adhérence du polymère au verre. Il s'agit de silane A174 de Union Carbide.
Les grains de quartz ont une dimension moyenne de l'ordre de 125 µm. On y a fixé le catalyseur peroxyde de la manière suivante: on met ces grains en contact avec une solution du peroxyde organique à laquelle on a ajouté un peu de silane A174. On verse la solution sur les grains tandis que le mélange est maintenu en mouvement.
On mélange 1 part en poids de résine colorée polyester et 2 parts en poids de grains de quartz préalablement revêtus d'un peroxyde organique (peroxyde de méthyléthylcétone) ainsi qu'une faible quantité d'un accélérateur de polymérisation (naphtenate de cobalt).
On coule le mélange dans les cuvettes. Le durcissement est atteint après 20 minutes à température ambiante. La matière de remplissage adhère au verre de façon durable et résiste à l'usure par abrasion et à l'humidité.

### Exemple 3

On fabrique des marches d'escalier ayant la même structure feuilletée et les mêmes dimensions que celles données à l'exemple 1. On creuse par sablage ou meulage, 2 rainures parallèles de 2mm de profondeur et 8 mm de largeur.
On dépose un masque sur la dalle de manière à protéger la surface du verre qui doit rester lisse. On projette ensuite dans les rainures un résine acrylique colorée liquide (SE 663 de Röhm) contenant une faible quantité de silane de couplage (A174 de Union Carbide).
On projette ensuite, sur la résine liquide, des grains de quartz préalablement traités pour y fixer le catalyseur de polymérisation (peroxyde de benzoyle). Cette fixation se fait de manière analogue à celle indiquée dans l'exemple 2. On observe le durcissement de la résine à température ambiante en 15 minutes. Une grande quantité de grains de quartz se situent en surface de la matière de remplissage. Cette matière adhère bien au verre et résiste à l'usure et à l'humidité.

## Revendications

1. Dalle de verre comprenant au moins une feuille de verre dont une partie au moins de l'une des faces a une rugosité plus élevée que le reste de cette face, caractérisée en ce que ladite feuille présente dans son épaisseur un ou plusieurs creux remplis d'une résine contenant des grains de matière dure.

2. Dalle de verre selon la revendication 1, caractérisée en ce qu'elle comprend au moins deux feuilles de verre feuilletées entre elles au moyen d'un film thermoplastique et la face dont une partie au moins présente une rugosité plus élevée constitue une face extérieure de l'ensemble feuilleté.

3. Dalle de verte selon la revendication 1 ou 2 caractérisée en ce qu'elle est de forme rectangulaire et le ou les creux sont situés dans une zone marginale le long d'au moins un des plus grands côtés d'un tel rectangle.

4. Dalle de verre selon l'une quelconque des revendications précédentes caractérisée en ce que le ou les creux se présentent sous la forme de rainure.

5. Dalle de verre selon la revendication 4 caractérisée en ce que la rainure présente un profil rectangulaire.

6. Dalle de verre selon l'une quelconque des revendications précédentes caractérisée en ce que les grains sont choisis parmi le quartz, la quartzite, le corindon et le carbure de silicium.

7. Dalle de verre selon l'une quelconque des revendications précédentes caractérisée en ce que la résine est un polymère époxy.

8. Dalle de verre selon l'une quelconque des revendications précédentes caractérisée en ce que la résine contient un agent d'adhérence tel qu'un silane.

9. Dalle de verre selon l'une quelconque des revendications précédentes caractérisée en ce que le ou les creux sont remplis d'une matière constituée d'au moins 50 % en poids de grains.

10. Dalle de verre selon l'une quelconque des revendications précédentes caractérisée en ce que les grains-ont un diamètre moyen inférieur à 1mm.

11. Dalle de verre selon l'une quelconque des revendications précédentes caractérisée en ce que la profondeur du ou des creux est comprise entre 10% et 60% de l'épaisseur de la feuille.

12. Marche d'escalier comprenant une dalle conforme à l'une quelconque des revendications précédentes.

13. Procédé de fabrication d'une dalle selon l'une quelconque des revendications précédentes caractérisé en ce qu'il comporte une première étape au cours de laquelle on forme par meulage ou abrasion un ou des creux dans la feuille de verre et une seconde étape au cours de laquelle on dépose dans le ou les creux des grains de matière dure et un ou des précurseurs de résine polymère et en ce que l'on fait ou l'on laisse polymériser la résine.

14. Procédé selon la revendication 13 caractérisé en ce que la polymérisation de la résine est effectuée au moyen d'un durcisseur.

15. Procédé selon la revendication 13 caractérisé en ce que la polymérisation de la résine est effectuée au moyen d'un catalyseur.

16. Procédé selon la revendication 15 caractérisé en ce que le catalyseur est fixé à la surface des grains.
